(19)

Europäisches
Patentamt
European
Patent Office
Office européen
des brevets

(11) **EP 3 447 643 A1**

(12) **EUROPEAN PATENT APPLICATION**
published in accordance with Art. 153(4) EPC

(43) Date of publication:
**27.02.2019 Bulletin 2019/09**

(51) Int Cl.:
***G06F 11/20*** (2006.01)

(21) Application number: **16901704.3**

(86) International application number:
**PCT/JP2016/064317**

(22) Date of filing: **13.05.2016**

(87) International publication number:
**WO 2017/195356 (16.11.2017 Gazette 2017/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Mitsubishi Electric Corporation
Chiyoda-ku
Tokyo 100-8310 (JP)**

(72) Inventor: **TSUKAMOTO, Yohei
Tokyo 100-8310 (JP)**

(74) Representative: **Pfenning, Meinig & Partner mbB
Patent- und Rechtsanwälte
Theresienhöhe 11a
80339 München (DE)**

(54) **DATA PROCESSING DEVICE, DATA PROCESSING METHOD, AND DATA PROCESSING PROGRAM**

(57)    A process data management unit (304) receives operand data, which is iteratively transmitted from PIO units (106) and for which a sequence number is set, from the PIO units (106), carries out operations for the received operand data, and transmits results of the operations to the PIO units (106). A sequence number management unit (306) calculates the sequence number of the operand data, for which the process data management unit (304) is to subsequently carry out the operations, as a next sequence number, each time the process data management unit (304) carries out the operations, and notifies a standby controller (11) of the calculated next sequence number through the control network (101). A tracking data management unit (307) transmits tracking data through the control network (101) to the standby controller (11), in case where a current controller (11) is temporarily provided with a transmission right for the tracking data.

Fig. 3

EP 3 447 643 A1

## Description

### Technical Field

The present invention relates to a data processing device, a data processing method, and a data processing program.

### Background Art

In plants such as power plants and chemical plants, control over opening and closing of valves or the like is automated with use of controllers. High reliability is required of the controllers for continued operations of the plants. In those plants, therefore, the reliability is maintained by duplication of the controllers.

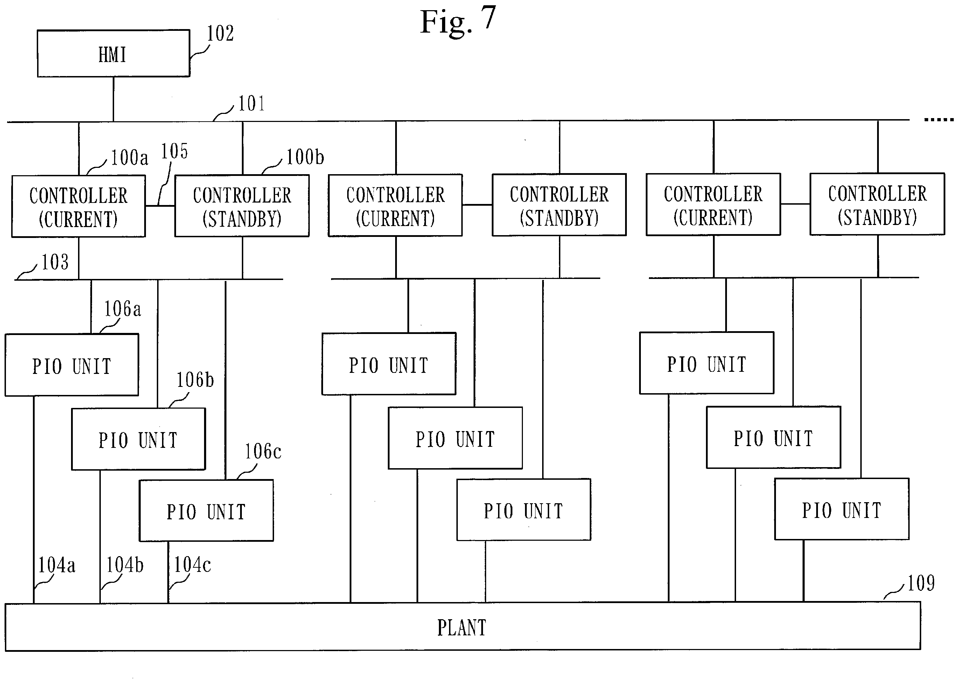

With use of Fig. 7, initially, configurations and actions of a system in which the controller is duplicated will be described.

In the system illustrated in Fig. 7, a controller 100a and a controller 100b are connected to a control network 101. Hereinbelow, the controller 100a and the controller 100b may be collectively referred to as controllers 100 when the controller 100a and the controller 100b do not have to be distinguished.

An HMI (Human Machine Interface) 102 is connected to the control network 101.

The controllers 100 are connected though an I/O (Input/Output) network 103 to process input/output units 106a, 106b, and 106c (which will be referred to as PIO units 106a, 106b, and 106c below).

The PIO units 106a, 106b, and 106c may be collectively referred to as PIO units 106 when the PIO units 106a, 106b, and 106c do not have to be distinguished.

The PIO unit 106a periodically transmits, to the controllers 100, data acquired at an input/output terminal 104a and indicating a state of a plant 109.

The PIO unit 106b periodically transmits, to the controllers 100, data acquired at an input/output terminal 104b and indicating the state of the plant 109.

The PIO unit 106c periodically transmits, to the controllers 100, data acquired at an input/output terminal 104c and indicating the state of the plant 109.

The controller 100a and the controller 100b each receive the data from the PIO units 106a, 106b, and 106c.

The HMI 102 displays a control state of the plant 109 to an operator and transmits instructions for control over the plant 109 to the controller 100a and the controller 100b in accordance with input from the operator. The HMI 102 is a panel computer, for instance.

The controller 100a carries out operations based on the data (the state of the plant 109) received from the PIO units 106 and on the instructions received from the HMI 102 and periodically transmits data indicating results of the operations to the PIO units 106. The controller 100a transmits the state of the plant 109 to the HMI 102. The controller 100b stands by while the controller 100a acts normally and supersedes the controller 100a when an abnormality occurs in the controller 100a. The controller 100a may be referred to as a current controller 100 and the controller 100b may be referred to as a standby controller 100. In the drawings, the controller 100a may be described as "CURRENT" and the controller 100b may be described as "STANDBY".

The PIO unit 106a transmits the results of the operations from the controller 100a, through the input/output terminal 104a to the plant 109.

The PIO unit 106b transmits the results of the operations from the controller 100a, through the input/output terminal 104b to the plant 109.

The PIO unit 106c transmits the results of the operations from the controller 100a, through the input/output terminal 104c to the plant 109.

The data that is transmitted and received between the controllers 100 and the PIO units 106 is referred to as process data.

The controller 100a and the controller 100b are connected through a tracking bus 105. The controller 100a transmits data inside the controller 100a so that the controller 100b may immediately take over the control, when an abnormality occurs.

In the system illustrated in Fig. 7, there are a plurality of combinations of pairs of the controllers 100 and a plurality of the PIO units 106. The pairs of controllers 100 are connected through the control network 101 to the HMI 102. The pairs of the controllers 100 are each connected through the tracking bus 105.

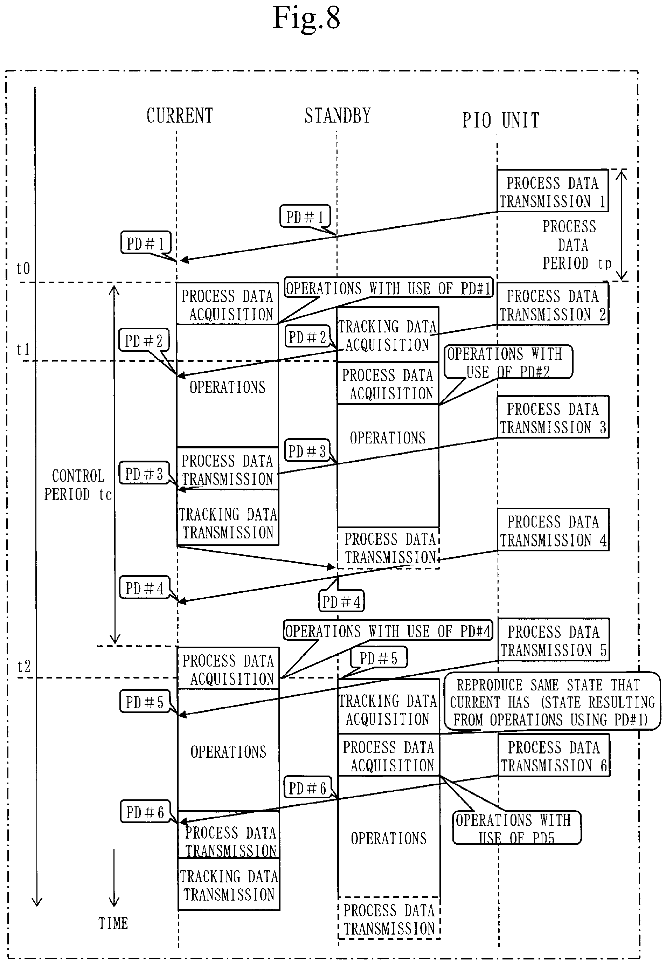

With use of Fig. 8, details of the actions of the system of Fig. 7 will next be described.

The PIO units 106 transmit the process data to the controllers 100 periodically in a process data period $t_p$. Hereinbelow, the process data may be expressed as PD#n. A character "n" in PD#n denotes a sequence number that indicates the order of transmissions of the process data. That is, n = 1, 2 ....

The controllers 100 carry out process data acquisition processing, operational processing, process data transmission processing, and tracking data transmission processing periodically in a control period $t_c$.

The PIO units 106 transmit PD#1 to the controllers 100 in process data transmission 1.

The controller 100a and the controller 100b receive PD#1 (balloons designated by PD#1 in Fig. 8). Then the controller 100a and the controller 100b each store the received PD#1 in an internal memory therein.

At time $t_0$, the controller 100a carries out the process data acquisition processing. The process data acquisition processing is processing in which a processor in the controller 100 reads out the process data from the memory in the controller 100. At the time $t_0$, as the process data acquisition processing, the processor in the controller 100a reads out PD#1 that is the process data received latest from the memory and saves PD#1, having been read out, in a buffer in the processor.

Subsequently, the processor in the controller 100a carries out operations with use of PD#1. It is assumed that results of the operations are determined based only on the instructions (target values) received from the HMI 102, series of data (sizes of series for use in the operations differ among systems) transmitted to the PIO units 106 up to that point, and PIO data for use in the operations.

Further, the controller 100a transmits the results of the operations to the PIO units 106 in the process data transmission processing (illustration of an arrow of transmission is omitted).

Finally, the controller 100a carries out the tracking data transmission processing. In the tracking data transmission processing, the controller 100a transmits tracking data to the controller 100b. The tracking data is data for notification of the results of the operations and an internal state of the controller 100a. Though illustration is omitted in Fig. 8, the controller 100b receives the tracking data and stores the received tracking data in the internal memory therein.

At time $t_1$, subsequently, the controller 100b carries out operations with use of PD#2 that is the process data received latest. The controller 100b, however, does not transmit results of the operations to the PIO units 106. That is, in the controller 100b, the results of the operations are not actually transmitted, though there is a time span for the process data transmission processing.

At time $t_2$, subsequently, the controller 100b carries out tracking data acquisition processing. In the tracking data acquisition processing, the processor in the controller 100b reads out the tracking data from the memory and saves the tracking data, having been read out, in a buffer in the processor. The processor in the controller 100b carries out following updates based on the tracking data.

- Output values (results of operations) to the PIO units 106
- Internal state

In case where the controller 100b does not carry out the updates with use of the tracking data, the controller 100a and the controller 100b carry out the operations with use of different series of the process data. When the controller 100a breaks down in such a situation so that the control is taken over by the controller 100b, inexpediency is caused by occurrence of a phenomenon (called disturbance) in which values that are transmitted from the controller 100b to the PIO units 106 sharply change.

In the system of Fig. 7, the controller 100a and the controller 100b are connected one-on-one by the tracking bus 105 different from the control network 101. Therefore, a configuration thereof is complicated.

Patent Literature 1 discloses a method in which the tracking bus 105 is made common to the control network 101 in order that the configuration of the system illustrated in Fig. 7 may be simplified.

**Citation List**

**Patent Literature**

Patent Literature 1: JP 2007-323457

**Summary of Invention**

**Technical Problem**

According to Patent Literature 1, which proposes the method of integrating the tracking bus with another network, the controller 100a transmits the tracking data to the controller 100b each time the controller 100a carries out operations. Accordingly, there is a problem in that a network band is oppressed by the transmissions of the tracking data.

The present invention mainly aims at solving such a problem. More specifically, the present invention mainly aims at avoiding a situation in which the network band is oppressed by the transmissions of the tracking data.

**Solution to Problem**

A data processing device that is connected to a backup device through a first network connected to a higher-level device and that is connected to equipment through a second network different from the first network, includes:

an operation management unit to receive operand data, which is iteratively transmitted from the equipment and for which a sequence number is set, from the equipment through the second network, to carry out operations for the received operand data, and to transmit results of the operations through the second network to the equipment;
a sequence number management unit to calculate the sequence number of the operand data, for which the operation management unit is to subsequently carry out the operations, as a next sequence number, each time the operation management unit carries out the operations and to notify the backup device of the calculated next sequence number through the first network; and
a tracking data management unit, in case where the data processing device is temporarily provided with a transmission right for tracking data for notification of the results of the operations by the operation management unit and an internal state of the data processing device, to transmit the tracking data through the first network to the backup device.

**Advantageous Effects of Invention**

According to the invention, the transmissions of the tracking data are reduced so that the situation in which the network band is oppressed by the transmissions of the tracking data may be avoided.

**Brief Description of Drawings**

Fig. 1 illustrates a system configuration example according to Embodiment 1.
Fig. 2 illustrates a hardware configuration example of a controller 11 according to Embodiment 1.
Fig. 3 illustrates a functional configuration example of the controller 11 according to Embodiment 1.
Fig. 4 is a data flowchart illustrating an example of actions according to Embodiment 1.
Fig. 5 is a flowchart illustrating an example of actions of a controller 11a according to Embodiment 1.
Fig. 6 is a flowchart illustrating an example of actions of a controller 11b according to Embodiment 1.
Fig. 7 illustrates a conventional system configuration example.
Fig. 8 is a data flowchart illustrating a conventional example of actions.

**Description of Embodiments**

Embodiment 1.

***Description on configurations***

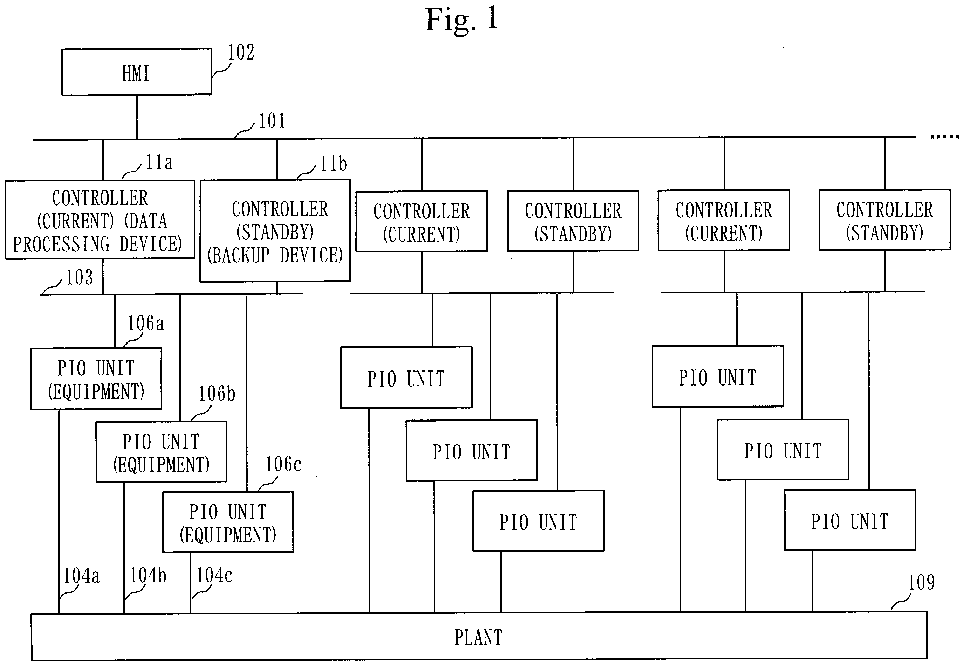

Fig. 1 illustrates a system configuration example according to the present embodiment.
The control network 101, the HMI 102, an I/O network 103, the input/output terminal 104a, the input/output terminal 104b, the input/output terminal 104c, the PIO unit 106a, the PIO unit 106b, the PIO unit 106c, and the plant 109 are the same as illustrated in Fig. 7. In the present embodiment as well, the PIO units 106a, 106b, and 106c may be collectively referred to as the PIO units 106 when the PIO units 106a, 106b, and 106c do not have to be distinguished.
A controller 11a and a controller 11b are connected through the control network 101 to the HMI 102. The HMI 102 corresponds to a higher-level device. The control network 101 corresponds to a first network.
The controller 11a and the controller 11b are connected through the I/O network 103 to the PIO units 106a, 106b, and 106c. The PIO units 106a, 106b, and 106c each correspond to the equipment. The I/O network 103 corresponds to a second network.
The controller 11a carries out operations based on data (a state of the plant 109) received from the PIO units 106 and on instructions received from the HMI 102 and periodically transmits data indicating results of the operations to the PIO units 106. The controller 11a transmits the state of the plant 109 to the HMI 102. The controller 11b stands by while the controller 11a acts normally and supersedes the controller 11a when an abnormality occurs in the controller 11a. The controller 11a may be referred to as a current controller 11 and the controller 11b may be referred to as a standby controller 11. In the drawings, the controller 11a may be described as "CURRENT" and the controller 11b may be described as "STANDBY".

The controller 11a corresponds to the data processing device. Actions that are carried out by the controller 11a correspond to the data processing method.

The controller 11b backs up the controller 11a and corresponds to the backup device.

Hereinbelow, the controller 11a and the controller 11b may be collectively referred to as controllers 11 when the controller 11a and the controller 11b do not have to be distinguished.

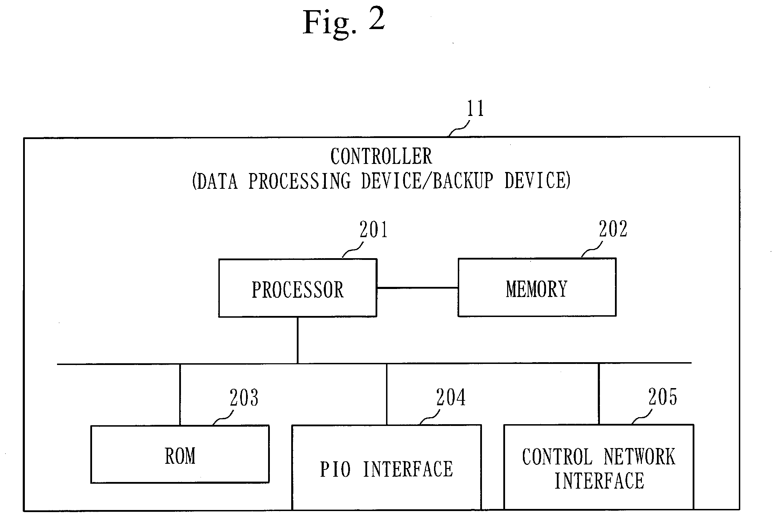

Fig. 2 illustrates a hardware configuration example of the controller 11.

The controller 11 is a computer.

The controller 11 includes a processor 201, a memory 202, a ROM (Read Only Memory) 203, a PIO interface 204, and a control network interface 205, as hardware.

Programs that fulfil functions of a control unit 303 that will be described later are stored in the ROM 203.

The programs that fulfil the functions of the control unit 303 are loaded from the ROM 203 onto the memory 202 and are executed by the processor 201.

The PIO interface 204 is an interface with the I/O network 103. The PIO interface 204 receives process data from the PIO units 106 and transmits process data for the PIO units 106 to the PIO units 106.

The control network interface 205 is an interface with the control network 101. The control network interface 205 of the controller 11a transmits a message for notification of a sequence number of the process data to the controller 11b and transmits tracking data to the controller 11b. The control network interface 205 of the controller 11b receives the message for the notification of the sequence number from the controller 11a and receives the tracking data from the controller 11a.

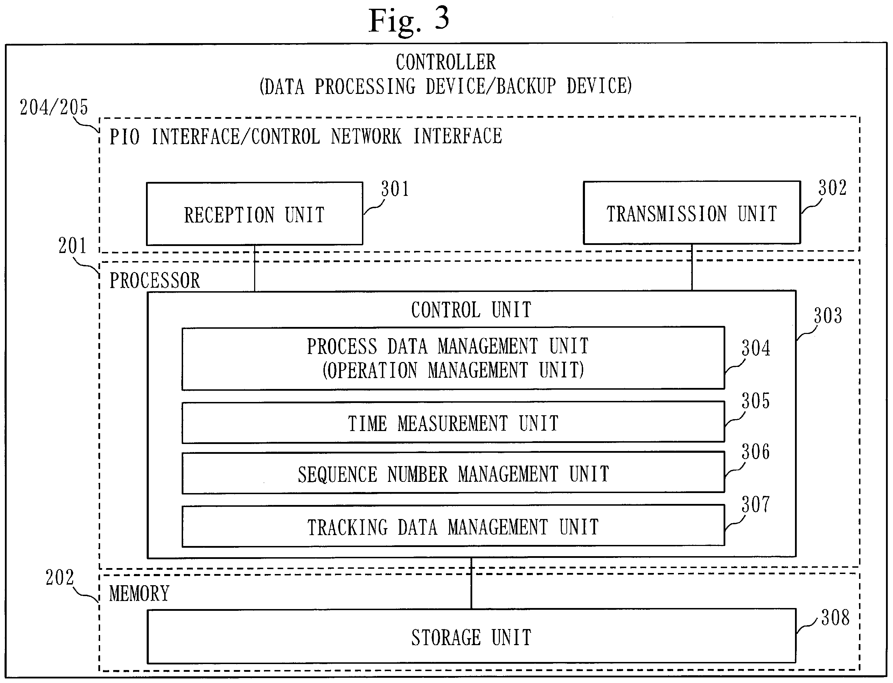

Fig. 3 illustrates a functional configuration example of the controller 11.

A reception unit 301 receives data from the control network 101 or the I/O network 103.

A transmission unit 302 transmits data to the control network 101 or the I/O network 103.

More specifically, the reception unit 301 of the current controller 11 receives the process data from the PIO units 106 through the I/O network 103. The reception unit 301 of the controller 11a receives the instructions from the HMI 102 through the control network 101. The transmission unit 302 of the controller 11a transmits the message for the notification of the sequence number and the tracking data through the control network 101 to the controller 11b.

The reception unit 301 of the controller 11b receives the process data from the PIO units 106 through the I/O network 103. The reception unit 301 of the controller 11b receives the instructions from the HMI 102 through the control network 101. The reception unit 301 of the controller 11b receives the message for the notification of the sequence number and the tracking data from the controller 11a through the control network 101.

The reception unit 301 and the transmission unit 302 are implemented by the PIO interface 204 and the control network interface 205.

The control unit 303 controls actions of the controller 11.

The control unit 303 is composed of a process data management unit 304, a time measurement unit 305, a sequence number management unit 306, and a tracking data management unit 307.

In the current controller 11, the process data management unit 304 receives the process data (example of operand data), which is iteratively transmitted from the PIO units 106 and for which a sequence number is set, from the PIO units 106 through the I/O network 103 and the reception unit 301. The process data management unit 304 carries out operations for the received process data and transmit results of the operations through the transmission unit 302 and the I/O network 103 to the PIO units 106.

In the standby controller 11, the process data management unit 304 selects the process data to be used in the operations, based on a next sequence number (to be described later) notified from the current controller 11. Then the operations for the selected process data are carried out. In the standby controller 11, the process data management unit 304 does not transmit the results of the operations.

The process data management unit 304 of the current controller 11 corresponds to the operation management unit. Processing that is carried out by the process data management unit 304 of the current controller 11 corresponds to the operation management processing.

In the current controller 11, the time measurement unit 305 measures time $t_d$ that will be described later.

In the current controller 11, the sequence number management unit 306 calculates a sequence number of the process data, for which the process data management unit 304 is to subsequently carry out operations, as the next sequence number, each time the process data management unit 304 carries out the operations. Then the sequence number management unit 306 notifies the standby controller 11 of the calculated next sequence number through the transmission unit 302 and the control network 101.

In the standby controller 11, the sequence number management unit 306 stores the next sequence number notified from the current controller 11, in a storage unit 308.

Processing that is carried out by the sequence number management unit 306 of the current controller 11 corresponds to the sequence number management processing.

In the current controller 11, the tracking data management unit 307 transmits the tracking data through the transmission unit 302 and the control network 101 to the standby controller 11, in case where the current controller 11 is temporarily provided with a transmission right for the tracking data. The tracking data is data for notification of the results of the operations by the process data management unit 304 and an internal state of the current controller 11.

More specifically, in case where the current controller 11 is temporarily provided with the transmission right, the tracking data management unit 307 of the current controller 11 determines whether the tracking data has been transmitted to the standby controller 11 in the past or not. In case where the tracking data has not been transmitted to the standby controller 11, the tracking data for notification of latest results of the operations by the process data management unit 304 and the current internal state of the current controller 11 is transmitted to the standby controller 11.

In the standby controller 11, the tracking data management unit 307 receives the tracking data through the control network 101 and the reception unit 301 and stores the received tracking data in the storage unit 308. In the standby controller 11, the tracking data management unit 307 carries out an update of the results of the operations and an update of the internal state of the standby controller 11, based on the tracking data.

Processing that is carried out by the tracking data management unit 307 of the current controller 11 corresponds to the tracking data management processing.

Functions of the process data management unit 304, the time measurement unit 305, the sequence number management unit 306, and the tracking data management unit 307 are implemented by programs, for instance. The programs that fulfil the functions of the process data management unit 304, the time measurement unit 305, the sequence number management unit 306, and the tracking data management unit 307 are executed by the processor 201. The programs that fulfil the functions of the process data management unit 304, the time measurement unit 305, the sequence number management unit 306, and the tracking data management unit 307 correspond to the data processing programs.

The storage unit 308 stores the received process data, the results of the operations by the process data management unit 304, measurement time given by the time measurement unit 305, the next sequence number, the tracking data, and the like.

The storage unit 308 is implemented by the memory 202.

*** Description on actions ***

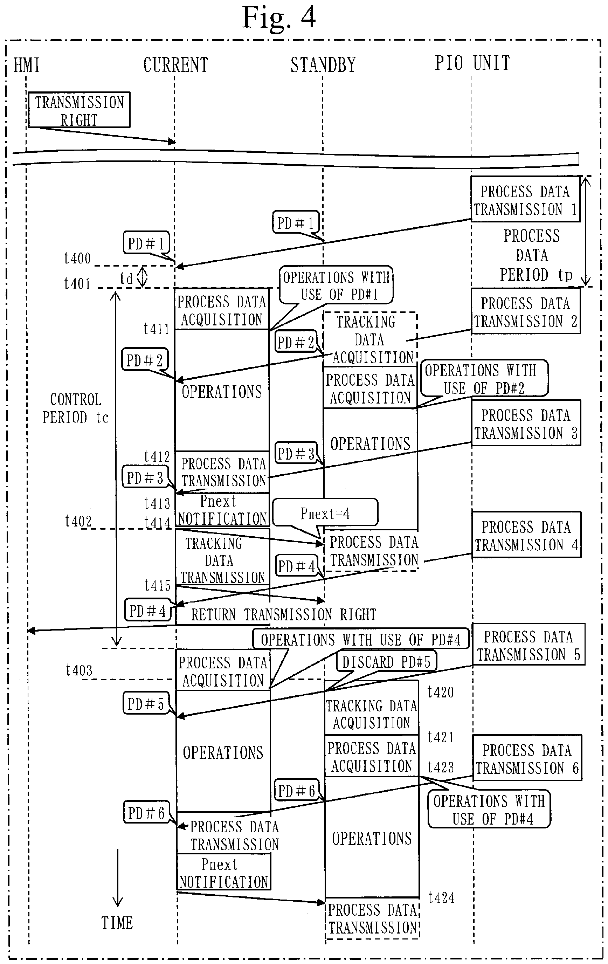

Actions according to the present embodiment will next be described with use of Fig. 4.

In the present embodiment, a concept of the transmission right for the tracking data is introduced.

The current controller 11 is temporarily provided with the transmission right for the tracking data. The current controller 11 is capable of transmitting the tracking data only while the current controller 11 is provided with the transmission right for the tracking data. When the transmission right for the tracking data is not provided, the current controller 11 is incapable of transmitting the tracking data. That is, the current controller 11 then skips the tracking data transmission processing.

Only one transmission right exists on the control network 101 at the same time. It is assumed that one node determined arbitrarily in advance has the first transmission right in the system. It is assumed hereinbelow that the HMI 102 has the first transmission right.

After the system is activated, the HMI 102 selects one current controller 11 from among a plurality of current controllers 11 and transmits the transmission right for the tracking data to the selected current controller 11.

In Fig. 4, the HMI 102 transmits the transmission right to the controller 11a.

At time $t_{400}$, the reception unit 301 of the controller 11a receives PD#1.

In the controller 11a, the time measurement unit 305 measures the time $t_d$ from reception of PD#1 at the time $t_{400}$ to actual use of PD#1 at time $1_{401}$.

At the time $t_{401}$, the process data management unit 304 of the controller 11a carries out the process data acquisition processing as with the conventional controller 100a illustrated in Fig. 8. Then the process data management unit 304 carries out operations as with the conventional controller 100a illustrated in Fig. 8 and, at time $t_{412}$, the transmission unit 302 transmits the process data for notification of results of the operations to the PIO units 106.

In the controller 11a, at time $t_{413}$ after the transmission of the process data, the sequence number management unit 306 calculates a next sequence number $P_{next}$. The next sequence number $P_{next}$ is a sequence number of the process data for which the process data management unit 304 is to subsequently carry out operations, as previously described.

Specifically, the sequence number management unit 306 calculates the next sequence number $P_{next}$ in accordance with expression 1. In expression 1, $P_{last}$ denotes the sequence number of the process data used in last operations. Besides, $t_c$ denotes the control period, $t_p$ denotes the process data period, and $t_d$ denotes the time measured by the time measurement unit 305.

Then the sequence number management unit 306 notifies the controller 11b of the next sequence number $P_{next}$ through the transmission unit 302 and the control network 101.
FORMULA 1

$$P_{next} = P_{last} + \left[ \frac{t_c - (t_p - t_d)}{t_p} + 1 \right] \qquad (1)$$

In an example of Fig. 4, the controller 11a notifies the controller 11b of a sequence number 4 (PD#4). In addition, the tracking data management unit 307 of the controller 11a then determines whether two conditions that follow are satisfied or not. In case where the two conditions that follow are satisfied, the tracking data management unit 307 of the controller 11a transmits the tracking data to the controller 11b.

- The tracking data has never been transmitted to the controller 11b since the system is activated.
- The controller 11a has the transmission right for the tracking data.

After transmitting the tracking data, the controller 11a returns the transmission right for the tracking data to the HMI 102.

Though the controller 11b receives PD#5 at time $t_{403}$, the controller 11b discards PD#5 because PD#5 is greater than PD#4 that is the next sequence number notified from the controller 11a.

Above actions remove necessity for communication of the tracking data because the process data used in the operations in the controller 11b is the same as that in the controller 11a after the actions.

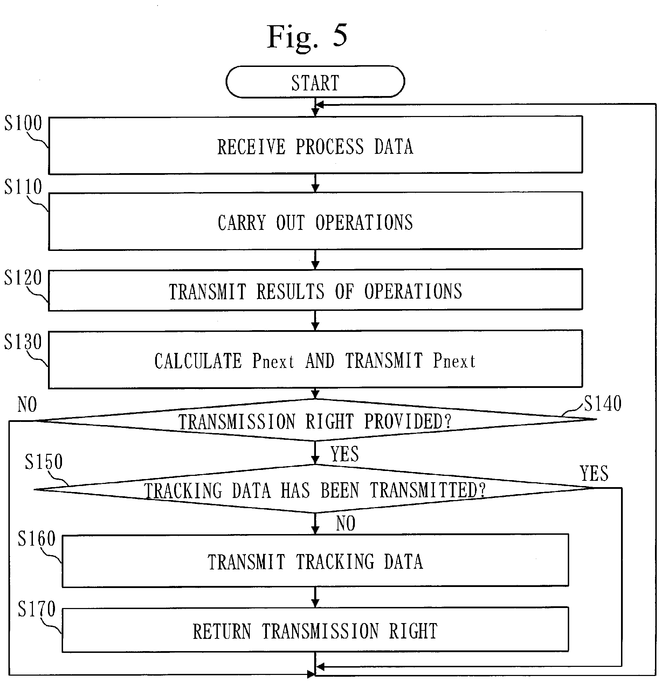

An example of actions of the controller 11a will next be described with reference to a flowchart of Fig. 5.

In step S100, the reception unit 301 receives the process data transmitted from the PIO units 106, through the I/O network 103. The process data management unit 304 stores the process data in the storage unit 308.

Simultaneously with step S100, the time measurement unit 305 starts measurement of the time span $t_d$.

In step S110, subsequently, the process data management unit 304 acquires the process data from the storage unit 308 and carries out operations with use of the process data.

Simultaneously with step S110, the time measurement unit 305 stops the measurement of the time span $t_d$.

In step S120, subsequently, the transmission unit 302 transmits from the I/O network 103, to the PIO units 106, the process data for notification of results of the operations.

In step S130, subsequently, the sequence number management unit 306 calculates the next sequence number $P_{next}$ in accordance with above-mentioned expression 1 and the transmission unit 302 notifies the controller 11b of the next sequence number $P_{next}$ through the control network 101.

In step S140, subsequently, the tracking data management unit 307 determines whether the controller 11a is provided with the transmission right for the tracking data or not.

In case where the controller 11a is provided with the transmission right for the tracking data, the tracking data management unit 307 determines whether or not the tracking data has been transmitted to the controller 11b since the system was activated.

In case where the tracking data has not been transmitted to the controller 11b, the transmission unit 302 transmits the tracking data through the control network 101 to the controller 11b.

In step S170, finally, the transmission unit 302 returns the transmission right for the tracking data to the HMI 102.

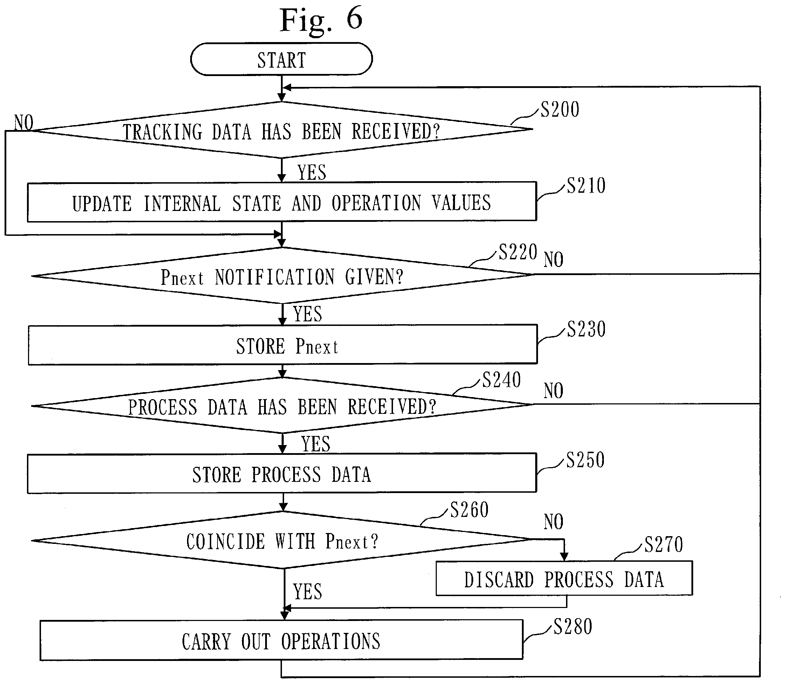

An example of actions of the controller 11b will next be described with reference to a flowchart of Fig. 6.

When the reception unit 301 receives the tracking data in step S200, the tracking data management unit 307 updates the internal state of the controller 11b and the results of the operations in accordance with the tracking data in step S210. The tracking data management unit 307 stores the internal state and the results of the operations that have been updated, in the storage unit 308.

When notification of the next sequence number $P_{next}$ is given by the controller 11a in step S220, the sequence number management unit 306 stores the next sequence number $P_{next}$ in the storage unit 308 in step S230.

When the reception unit 301 receives the process data in step S240, the process data management unit 304 stores the process data in the storage unit 308 in step S250.

In step S260, subsequently, the process data management unit 304 determines whether the sequence number of the process data received in step S240 coincides with the next sequence number $P_{next}$ or not.

In case where the sequence number of the process data received in step S240 does not coincide with the next sequence number $P_{next}$, the process data management unit 304 discards the process data in step S270.

On the other hand, in case where the sequence number of the process data received in step S240 coincides with the next sequence number $P_{next}$, the process data management unit 304 carries out operations with use of the process data. Then the process data management unit 304 stores results of the operations in the storage unit 308.

*** Description on effects of embodiment ***

In the present embodiment, as described above, the current controller 11 transmits the tracking data to the standby controller 11 only when being provided with the transmission right for the tracking data. Thus the situation in which the network band is oppressed by the transmission of the tracking data can be avoided.

In case where a technique described in the present embodiment is not used, the tracking data is transmitted from the current controller to the standby controller in each control period $t_c$. In case where the technique described in the present embodiment is not used, therefore, a band required for the communication of the tracking data between a pair of the current controller and the standby controller has a value obtained by multiplication of the number of repetitions $n_p$ of the control period $t_c$ by a data size $d_t$ of the tracking data. On conditions of $n_p$ = 50 (times) and the data size $d_t$ = 240 Mbps, for instance, the band required for the communication of the tracking data is 12 Gbps. Costs of the control network 101 are increased in case where the technique described for the present embodiment is not used, because methods (such as 10GBASE-T) for realizing the communication over 1 Gbp are becoming widespread but are still expensive.

In the present embodiment, the tracking data is transmitted only one time between one pair of the current controller and the standby controller. Accordingly, the band required for the communication of the tracking data between one pair of the current controller and the standby controller 11 is limited to the data size $d_t$ (240 Mbps) of the tracking data.

According to the present embodiment, therefore, the control network 101 may be configured with 1000BASE-T that is widespread and inexpensive.

In the present embodiment, the standby controller 11 is notified of the next sequence number each time the operations with use of the process data are carried out by the process data management unit 304 of the current controller 11. As a result, the standby controller 11 may continue the operations with use of the same process data that is used in the current controller 11 even though the number of the transmissions of the tracking data is decreased.

According to the present embodiment, integration of the tracking bus with the control network makes it possible to connect a plurality of standby controllers 11 to one current controller 11. Therefore, the system that is more reliable may be constructed.

*** Description on hardware configuration ***

Finally, supplementary description on the hardware configuration of the controller 11 will be given.

The processor 201 illustrated in Fig. 2 is an IC (Integrated Circuit) that carries out processing.

The processor 201 is a CPU (Central Processing Unit), a DSP (Digital Signal Processor), or the like.

The memory 202 illustrated in Fig. 2 is a RAM (Random Access Memory).

A flash memory or an HDD (Hard Disk Drive) may be used in place of the ROM 23.

The PIO interface 204 and the control network interface 205 that are illustrated in Fig. 2 include a receiver that receives data and a transmitter that transmits data.

Each of the PIO interface 204 and the control network interface 205 is a communication chip or an NIC (Network Interface Card), for instance.

An OS (Operating System) is also stored in the ROM 203.

At least a portion of the OS is executed by the processor 201.

While executing at least the portion of the OS, the processor 201 executes the programs that fulfil the functions of the process data management unit 304, the time measurement unit 305, the sequence number management unit 306, and the tracking data management unit 307 (which will be collectively referred to as the "units", hereinbelow).

The processor 201 executes the OS, so that task management, memory management, file management, communication control, and the like are carried out.

The controller 11 may include a plurality of processors that substitute for the processor 201. Execution of the programs that fulfil the functions of the "units" is shared by the plurality of processors. Each of the processors is an IC that carries out processing as with the processor 201.

Information, data, signal values, variable values, and the like that indicate results of processing in the "units" are stored in at least any of the memory 202 and a register and a cache memory in the processor 201.

The programs that fulfil the functions of the "units" may be stored in a portable storage medium such as a magnetic disk, a flexible disk, an optical disk, a compact disk, a Blu-ray (a registered trademark) disk, or a DVD.

The "units" may be read as "circuits", "steps", "procedures", or "processing".

The controller 11 may be implemented by an electronic circuit such as a logic IC (Integrated Circuit), a GA (Gate Array), an ASIC (Application Specific Integrated Circuit), or an FPGA (Field-Programmable Gate Array).

In this case, the "units" are each implemented as a portion of the electronic circuit.

The processor and the electronic circuits may be collectively referred to as processing circuitry.

**Reference Signs List**

11: controller; 100: controller; 101: control network; 102: HMI; 103: I/O network; 104: input/output terminal; 105: tracking bus; 106: PIO unit; 109: plant; 201: processor; 202: memory; 203: ROM; 204: PIO interface; 205: control network interface; 301: reception unit; 302: transmission unit; 303: control unit; 304: process data management unit; 305: time measurement unit; 306: sequence number management unit; 307: tracking data management unit; 308: storage unit

**Claims**

1.  A data processing device that is connected to a backup device through a first network connected to a higher-level device and that is connected to equipment through a second network different from the first network, the data processing device comprising:

    an operation management unit to receive operand data, which is iteratively transmitted from the equipment and for which a sequence number is set, from the equipment through the second network, to carry out operations for the received operand data, and to transmit results of the operations through the second network to the equipment;
    a sequence number management unit to calculate the sequence number of the operand data, for which the operation management unit is to subsequently carry out the operations, as a next sequence number, each time the operation management unit carries out the operations and to notify the backup device of the calculated next sequence number through the first network; and
    a tracking data management unit, in case where the data processing device is temporarily provided with a transmission right for tracking data for notification of the results of the operations by the operation management unit and an internal state of the data processing device, to transmit the tracking data through the first network to the backup device.

2.  The data processing device according to claim 1, wherein
    in case where the data processing device is temporarily provided with the transmission right, the tracking data management unit determines whether the tracking data has been transmitted to the backup device in the past or not, and in case where the tracking data has not been transmitted to the backup device, the tracking data management unit transmits the tracking data through the first network to the backup device.

3.  The data processing device according to claim 1, wherein
    in case where the data processing device is temporarily provided with the transmission right, the tracking data management unit transmits the tracking data for notification of latest results of the operations by the operation management unit and a current internal state of the data processing device, through the first network to the backup device.

4.  A data processing method by a computer that is connected to a backup device through a first network connected to a higher-level device and that is connected to equipment through a second network different from the first network, the data processing method comprising:

    by the computer, receiving operand data, which is iteratively transmitted from the equipment and for which a sequence number is set, from the equipment through the second network, carrying out operations for the received operand data, and transmitting results of the operations through the second network to the equipment;
    by the computer, calculating the sequence number of the operand data, for which the operations are to be subsequently carried out, as a next sequence number, each time the operations are carried out, and notifying the backup device of the calculated next sequence number through the first network; and
    in case where the computer is temporarily provided with a transmission right for tracking data for notification of the results of the operations and an internal state of the computer, by the computer, transmitting the tracking data through the first network to the backup device.

5.  A data processing program that causes a computer, which is connected to a backup device through a first network connected to a higher-level device and which is connected to equipment through a second network different from the first network, to execute:

    operation management processing of receiving operand data, which is iteratively transmitted from the equipment and for which a sequence number is set, from the equipment through the second network, carrying out operations for the received operand data, and transmitting results of the operations through the second network to the equipment;

sequence number management processing of calculating the sequence number of the operand data, for which the operations of the operation management processing are to be subsequently carried out, as a next sequence number, each time the operations of the operation management processing are carried out, and notifying the backup device of the calculated next sequence number through the first network; and

tracking data management processing, in case where the computer is temporarily provided with a transmission right for tracking data for notification of the results of the operations of the operation management processing and an internal state of the computer, of transmitting the tracking data through the first network to the backup device.

# Fig. 1

# Fig. 2

CONTROLLER
(DATA PROCESSING DEVICE/BACKUP DEVICE) — 11

201 — PROCESSOR

202 — MEMORY

203 — ROM

204 — PIO INTERFACE

205 — CONTROL NETWORK INTERFACE

EP 3 447 643 A1

# Fig. 3

**CONTROLLER**
**(DATA PROCESSING DEVICE/BACKUP DEVICE)**

204/205

PIO INTERFACE/CONTROL NETWORK INTERFACE

| RECEPTION UNIT | 301 | | TRANSMISSION UNIT | 302 |

201

PROCESSOR

CONTROL UNIT 303

PROCESS DATA MANAGEMENT UNIT
(OPERATION MANAGEMENT UNIT) 304

TIME MEASUREMENT UNIT 305

SEQUENCE NUMBER MANAGEMENT UNIT 306

TRACKING DATA MANAGEMENT UNIT 307

202

MEMORY

STORAGE UNIT 308

EP 3 447 643 A1

# Fig. 4

## Fig. 5

START

S100 — RECEIVE PROCESS DATA

S110 — CARRY OUT OPERATIONS

S120 — TRANSMIT RESULTS OF OPERATIONS

S130 — CALCULATE Pnext AND TRANSMIT Pnext

S140 — TRANSMISSION RIGHT PROVIDED? — NO

YES

S150 — TRACKING DATA HAS BEEN TRANSMITTED? — YES

NO

S160 — TRANSMIT TRACKING DATA

S170 — RETURN TRANSMISSION RIGHT

EP 3 447 643 A1

# Fig. 6

START

S200
TRACKING DATA HAS BEEN RECEIVED?
NO
YES

S210
UPDATE INTERNAL STATE AND OPERATION VALUES

S220
Pnext NOTIFICATION GIVEN?
NO
YES

S230
STORE Pnext

S240
PROCESS DATA HAS BEEN RECEIVED?
NO
YES

S250
STORE PROCESS DATA

S260
COINCIDE WITH Pnext?
NO
YES

S270
DISCARD PROCESS DATA

S280
CARRY OUT OPERATIONS

# Fig. 7

EP 3 447 643 A1

# Fig.8

## INTERNATIONAL SEARCH REPORT

International application No.

PCT/JP2016/064317

A.   CLASSIFICATION OF SUBJECT MATTER
*G06F11/20*(2006.01)i

According to International Patent Classification (IPC) or to both national classification and IPC

B.   FIELDS SEARCHED

Minimum documentation searched (classification system followed by classification symbols)
G06F11/20

Documentation searched other than minimum documentation to the extent that such documents are included in the fields searched
Jitsuyo Shinan Koho       1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2011-198205 A   (Railway Technical Research Institute), 06 October 2011 (06.10.2011), paragraph [0038] (Family: none) | 1-5 |
| A | JP 2007-194815 A   (NEC Corp.), 02 August 2007 (02.08.2007), paragraph [0046] (Family: none) | 1-5 |
| A | JP 2010-45760 A   (Fujitsu Ltd.), 25 February 2010 (25.02.2010), paragraph [0095] & US 2010/0014418 A1 | 1-5 |

| ☒   Further documents are listed in the continuation of Box C. | ☐   See patent family annex. |
|---|---|

\*     Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 03 August 2016 (03.08.16) | 16 August 2016 (16.08.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/064317

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-152591 A (NEC Corp.), 08 July 2010 (08.07.2010), paragraphs [0082] to [0083] (Family: none) | 1-5 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007323457 A